# EUROPÄISCHE PATENTSCHRIFT

(11) **EP 3 803 443 B1**
(45) Veröffentlichungstag und Bekanntmachung des Hinweises auf die Patenterteilung: **18.11.2026**
(21) Anmeldenummer: 19714608.7
(22) Anmeldetag: 28.03.2019
(51) Int. Cl.: G01S 7/02, G01S 7/41, G01S 13/89, G01S 7/00, G01S 7/40, G01S 13/32, G01S 13/42, G01S 13/58, G01S 13/87, G01S 13/931, H01Q 13/02, H01Q 21/06, H01Q 21/24

(54) **POLARIMETRISCHES RADAR SOWIE EINE GEEIGNETE VERWENDUNG UND VERFAHREN HIERFÜR**
POLARIMETRIC RADAR AND A SUITABLE USE AND METHOD THEREFOR
RADAR POLARIMÉTRIQUE, SON UTILISATION APPROPRIÉE ET SON PROCÉDÉ À CETTE FIN

(30) Priorität: 08.06.2018 DE 102018209131; 12.07.2018 DE 102018211610
(43) Veröffentlichungstag der Anmeldung: 14.04.2021
(73) Patentinhaber: Cruise Munich GmbH, 85521 Ottobrunn (DE)
(72) Erfinder: TRUMMER, Stefan, 82024 Taufkirchen (DE)
(74) Vertreter: Manitz Finsterwald Patent- und Rechtsanwaltspartnerschaft mbB
(86) Internationale Anmeldenummer: PCT/EP2019/057849
(87) Internationale Veröffentlichungsnummer: WO 2019/233651

(56) Entgegenhaltungen:
- WO-A1-2018/087365
- DE-A1- 102013 102 424
- US-A1- 2017 310 758
- ERHART CHRISTIAN ET AL: "Design and demonstration of a full polarimetric sensor for surface texture characterisation", 2016 EUROPEAN RADAR CONFERENCE (EURAD), EUMA, 5 October 2016 (2016-10-05), pages 193 - 196, XP033041466

## Beschreibung

Die vorliegende Erfindung betrifft ein Radarsystem mit digitaler Phasencodierung und zirkular polarisierten Trägersignalen nach den Merkmalen des Anspruchs 1 sowie eine geeignete Verwendung nach Anspruch 7 und ein Verfahren zur Objektbestimmung nach Anspruch 8. Bekannterweise ist bei dem zukünftig angestrebten autonomen Fahren die Verwendung von mehreren Radarsensoren pro Fahrzeug notwendig. Beim aktuell eingesetzten Signalmodulierungsverfahren FMCW (Frequency Modulated Continuous Wave) kommt es dabei zu Interferenzen. Diese Interferenzen verursachen ein massives Ansteigen des Rauschlevels, so dass Objekte nicht mehr erkannt werden können. Konzepte und Strategien zur Vermeidung von Interferenzen gestalten sich schwierig, da signaltechnisch Ausweichstrategien gesucht werden müssen, z.B. frequenzmäßig oder durch abgestimmte Sendezyklen. Jedoch kommen diese Strategien an ihre Grenzen, wenn viele Radarsensoren und somit viele Störsignale gleichzeitig vorhanden sind, wie es z.B. beim autonomen Fahren der Fall ist. Aufgabe der vorliegenden Erfindung ist es, die im Stand der Technik vorhandenen Nachteile zu vermeiden bzw. derart zu verbessern, dass eine gesicherte Objektbestimmung erreicht werden kann.

Aus dem Stand der Technik DE 10 2013 102424 A1 ist ein polarimetrisches Radar zur Objektklassifikation bekannt.

Gelöst wird diese Aufgabe vorrichtungstechnisch mit den Merkmalen des Anspruchs 1 sowie verwendungs- und verfahrenstechnisch mit den Merkmalen der Ansprüche 7 und 8. Grundsätzlich ist darüber hinaus festzustellen, dass in Zukunft zunehmend Modulationsverfahren eingesetzt werden, bei denen die Phase moduliert wird. Dieses Modulationsverfahren wird als PMCW (Phase-Modulated Continuous Wave) bezeichnet. Hierbei werden mehrere Sendesignale von verschiedenen Sendern in der Phase moduliert und anmeldungsgemäß gleichzeitig gemäß dem MIMO (Multiple Input Multiple Output) Prinzip abgesendet. Die Empfangssignale werden nach der Signalprozessierung wieder den entsprechenden Sendern zugeordnet. Die Messung der Winkelablage erfolgt dann im Postprocessing mittels dem DBF (Digital Beam Forming) Verfahren.

Durch die zeitgleiche Verwendung mehrerer Sender kann eine große Antennenapertur generiert werden, die eine hohe Winkelauflösung auch bei großen Entfernungen ermöglicht. Außerdem erhält man durch die zeitgleiche Verwendung mehrerer Sender eine große Signalamplitude und einen großen Dynamikbereich (Störabstand), so dass auch bei großen Entfernungen Objektstrukturen detektiert werden können.

Eine weitere Anforderung des autonomen Fahrens ist anmeldungsgemäß die Klassifikation von Objekten. Dazu ist die Verwendung von zirkular polarisierten Wellen notwendig. Einerseits erhält man aufgrund der Zirkularität der Welle viele Rückstreupunkte und kann dadurch die Kontur der Ziele klar erkennen. Des Weiteren erhält man zu jedem Objekt ein charakteristisches polarimetrisches Muster. Mittels künstlicher Intelligenz respektive maschineller Lernverfahren können Algorithmen entwickelt werden, die hochpräzise Objekte klassifizieren können. Außerdem kann man mit zirkular polarisierten Wellen weitere Voraussetzungen für das autonome Fahren erfüllen, wie z.B. eine genaue Straßenzustandserkennung.

Damit polarimetrische Effekte am Ziel auch bei großen Zielentfernungen getrennt werden können, benötigt man eine hohe Winkelauflösung und einen großen Dynamikbereich. Aus diesem Grund kombiniert das erfindungsgemäße Radarsystem die oben genannten Technologien: Trägersignale mit zirkular polarisierten elektromagnetischen Wellen und ein PMCW- Modulationsverfahren. Durch das PMCW Verfahren ergeben sich erfindungsgemäß noch weitere Vorteile. So ist es verfahrenstechnisch möglich, dass Radarsysteme innerhalb eines Verbundes und/oder mit anderen Radarsystemen mittels Phasenkodierung zusätzliche Informationen und Funktionen miteinander abstimmen und/oder kommunizieren wie vorzugsweise:
- zeitliche Synchronisation mehrerer Sensoren
- Optimierte Codeauswahl, wenn mehrere Radarsensoren im gleichen Frequenzbereich betrieben werden
- Fahrzeugdaten wie beispielsweise Bremsverhalten
- Fahrstrecken inklusive Gefahrenstellen
- Verkehrsflussinformationen

Vorteilhafte Weiterbildungen der erfindungsgemäßen Gegenstände werden mit den Merkmalen der Unteransprüche erzielt.

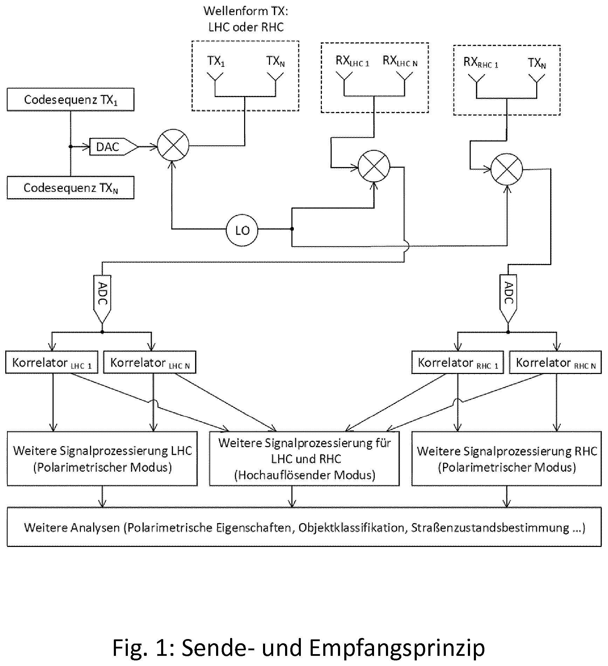

Fig. 1 zeigt das erfindungsgemäße Sende- und Empfangsprinzip. Es gibt mehrere Sender (TX₁ bis TXₙ) die zeitglich betrieben werden, wobei jeder Sender mit einem Sendesignal betrieben wird, dass mit einem individuellen digitalen Phasencode moduliert wird, gemäß dem PMCW (Phase-Modulated Continuous Wave) Verfahren. Danach folgt die Umsetzung der digitalen in analoge Signale mittels eines Digital-Analog-Umsetzer (DAC) und die Aufwärtsmischung in das Frequenzband zwischen 76 und 81 GHz. Jeder Sender strahlt nun sein individuell codiertes Signal ab, wobei die Wellen der elektromagnetischen Trägersignale, die von den Antennen abgestrahlt werden, zirkular polarisiert sind. Die Wellenform kann dabei linkszirkular oder rechtszirkular sein. Die von den Zielobjekten zurückreflektierten Signale gelangen zu den Empfangsantennen. Hierbei gibt es Empfangsantennen, die für linkszirkulare Polarisation ausgelegt sind, und Empfangsantennen, die für rechtszirkulare Polarisation ausgelegt sind. Danach erfolgt die Abwärtsmischung in das Basisband und Umsetzung der analogen in digitale Signale mittels eine Analog-Digital-Umsetzers (ADC). Es folgt für alle Empfangskanäle die Korrelation, die ermöglicht, dass jedes Sendesignal bei jedem Empfänger extrahiert werden kann. Danach werden für den erfindungsgemäßen polarimetrischen Modus nur für die linkszirkularen und nur für die rechtszirkularen Empfangskanäle Signalanalysen durchgeführt. Für den erfindungsgemäßen hochauflösenden Modus werden die linkszirkularen und die rechtszirkularen Empfangskanäle gemeinsam ausgewertet. Man erhält somit Radarbilddaten, inklusive einer 4D-Auflösung in Entfernung, Geschwindigkeit, horizontaler Richtung (Azimut) und vertikaler Richtung (Elevation), für die linkszirkularen Empfangskanäle, für die rechtszirkularen Empfangskanäle und für die gemeinsame Verwendung von links- und rechtszirkularen Empfangskanälen. Nun erfolgt die weitere Analyse. Das Radarbild, das die links- und rechtszirkularen Empfangskanäle beinhaltet, eignet sich für hochauflösende Algorithmen. Die Radarbilder, die Empfangskanäle mit nur einer Polarisation aufweisen, eignen sich bei deren Vergleich für die Analyse polarimetrischer Eigenschaften und darauf basierender Applikationen wie Objektklassifikation und Straßenzustandsbestimmung.

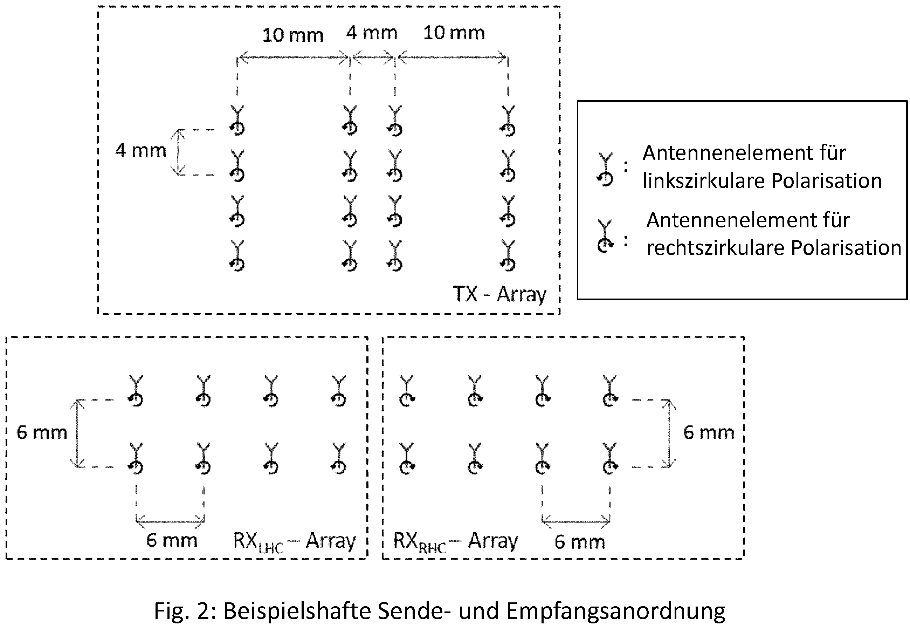

Fig. 2 zeigt beispielshaft eine erfindungsgemäße Sende- und Empfangsanordnung. Dabei sind alle Sendeantennen für linkszirkulare Polarisation ausgelegt. Für das erfindungsgemäße Radarsystem können auch alle Sendeantennen für rechtszirkulare Polarisation ausgelegt sein. Des Weiteren gibt es jeweils gleich viele Empfänger, die für linkszirkulare Polarisation ausgelegt sind, und Empfänger, die für rechtszirkulare Polarisation ausgelegt sind.

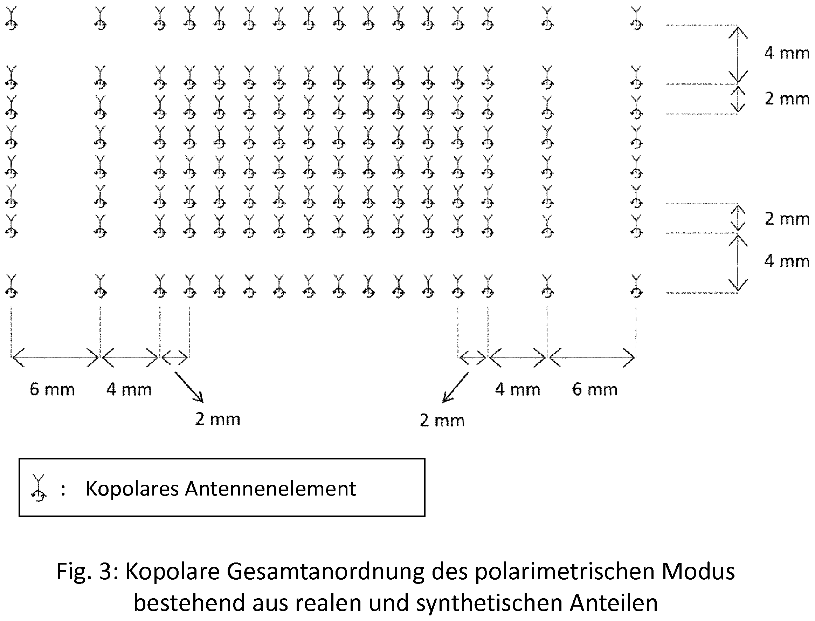

Fig. 3 zeigt das kopolare Gesamtarray, bestehend aus realen und synthetischen Antennenelementen, deren Positionen sich durch die Anordnung in Fig. 2 gemäß MIMO (Multiple Input Multiple Output) Prinzip ergeben. Kopolar bedeutet hierbei, dass nur die Empfänger zur Signalanalyse herangezogen werden, die auf dieselbe Polarisation wie die Sender ausgelegt sind. Diese Signalanalyse ist Teil des polarimetrischen Modus. In Fig. 3 werden linkszirkular polarisierte Wellen abgesendet und Empfänger verwendet, die auf linkszirkulare Polarisation ausgelegt sind. Hierbei ist eine Sende- Empfangsanordnung anzuwenden, die ein kopolares Gesamtarray erzeugt, dass eine bestimmte Abstandsregel einhält. Nämlich, dass der Antennenelementabstand in horizontaler und in vertikaler Richtung von der Mitte zum Rand des Antennenarrays mindestens gleichbleibt und an zumindest einer Position größer wird.

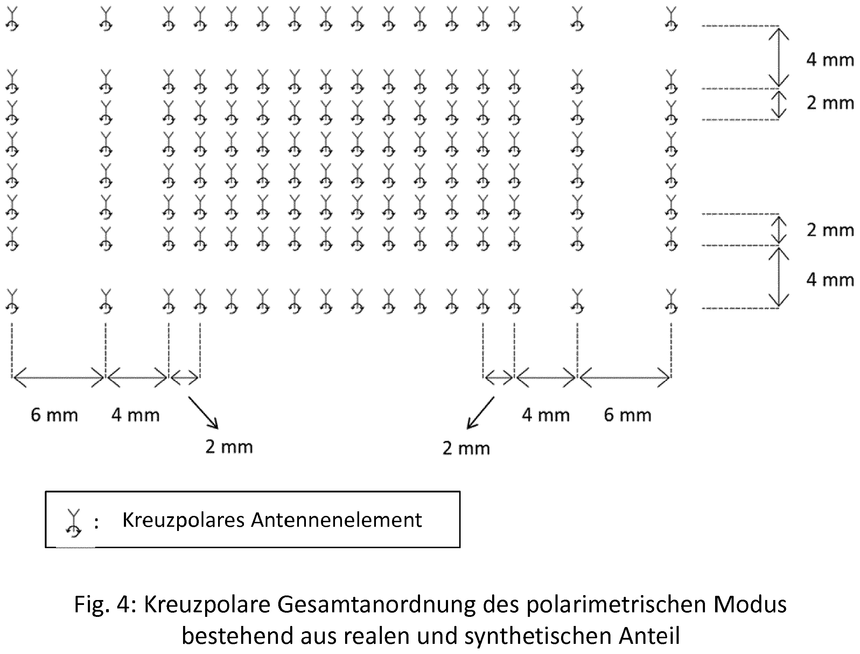

Fig. 4 zeigt das kreuzpolare Gesamtarray, bestehend aus realen und synthetischen Antennenelementen, deren Positionen sich durch die Anordnung in Fig. 2 gemäß dem MIMO Prinzip ergeben. Kreuzpolar bedeutet hierbei, dass nur die Empfänger zur Signalanalyse herangezogen werden, die auf die andere Polarisation wie die Sender ausgelegt sind. Diese Signalanalyse ist Teil des polarimetrischen Modus. In Fig. 4 werden linkszirkulare Wellen abgesendet und Empfänger verwendet, die auf rechtzirkulare Polarisation ausgelegt sind. Hierbei ist eine Sende- Empfangsanordnung anzuwenden, die ein kreuzpolares Gesamtarray erzeugt, dass eine bestimmte Abstandsregel einhält. Nämlich, dass der Antennenelementabstand in horizontaler und in vertikaler Richtung von der Mitte zum Rand des Antennenarrays mindestens gleichbleibt und an zumindest einer Position größer wird.

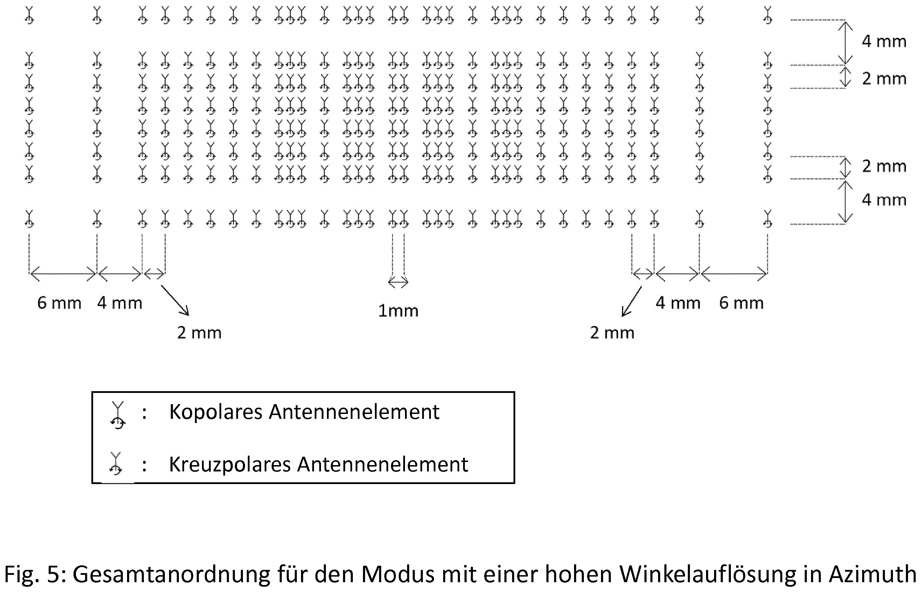

Fig. 5 zeigt das Gesamtarray für den Modus mit einer hohen Winkelauflösung in Azimut, bestehend aus realen und synthetischen Antennenelementen, deren Positionen sich durch die Anordnung in Fig. 2 gemäß dem MIMO Prinzip ergeben, wobei sowohl kopolare als auch kreuzpolare Antennenelemente verwendet werden. Dadurch wird in horizontaler Richtung eine große Antennenapertur generiert, die eine hohe Winkelauflösung in Azimut ermöglicht. Polarimetrische Signalunterschiede müssen hierbei in der Signalanalyse in der Belegungsfunktion berücksichtigt werden.

Erfindungsgemäß werden als Antennen Hohlleiterantennen verwendet, die entweder für linkszirkulare oder für rechtszirkulare Polarisation ausgelegt sind. Diese ermöglichen eine hohe Isolation zwischen den Polarisationsrichtungen. Diese hohe Isolation ist für die Analyse polarimetrischer Eigenschaften obligatorisch. Außerdem ermöglicht die Hohlleitertechnik exakt definierte Ausprägungen der Antennenphasenzentren, die für das MIMO Prinzip vorteilhaft sind. Im Folgenden werden geeignete Strukturen von Hohlleiterantennen beschrieben.

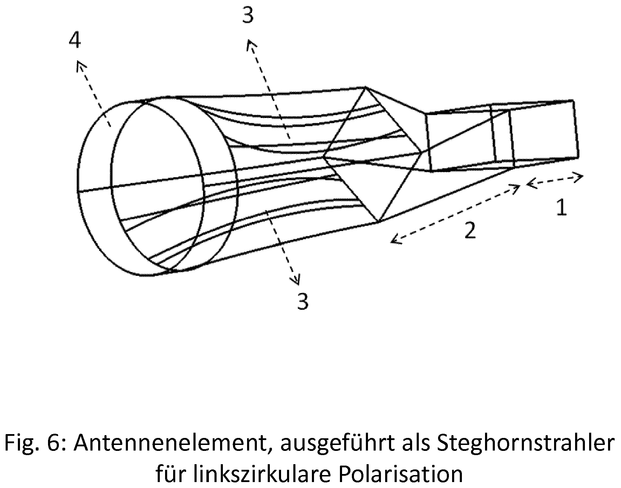

Fig. 6 zeigt ein Antennenelement, ausgeführt als Steghornstrahler für linkszirkular polarisierte Wellen. Das Antennenelement besitzt einen Anschluss bestehend aus einem Rechteckhohlleiter, der für eine H10-Welle ausgelegt ist. Danach folgt eine Anpassstruktur, die den Rechteckhohlleiter mit einem quadratischen Hohlleiter verbindet. Danach folgt ein Hohlleiter, der zwei seitlich angebrachte Stege aufweist und mit der Rundhohlleiterantennenapertur verbunden ist. Die beiden Stege wirken dabei als metallische Phasenschieber und sind um 45° zum Rechteckhohlleiter ausgerichtet. Mit diesem Aufbau wird eine linkszirkular polarisierte Welle an der Rundhohlleiterantennenapertur in eine H10-Welle am Antennenanschluss umgewandelt und umgekehrt.

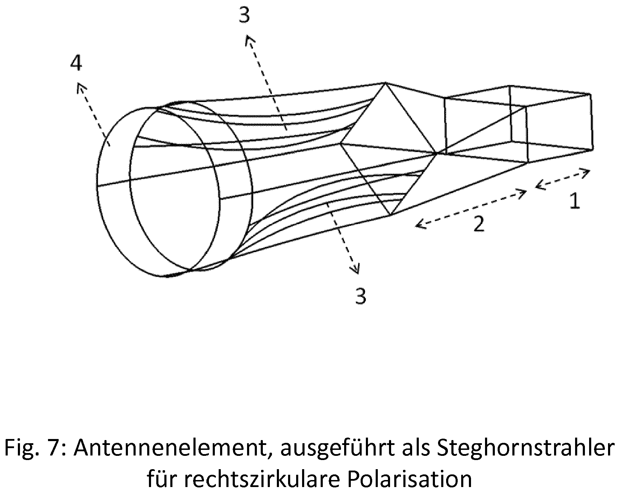

Fig. 7 zeigt ein Antennenelement, ausgeführt als Steghornstrahler für rechtszirkulare Polarisation. Der Unterschied zu dem Steghornstrahler in Fig. 6, der für eine linkszirkulare Polarisation ausgelegt ist, besteht darin, dass sich die Positionen der Stege an den jeweils beiden anderen Hohlleiterwänden befinden und somit um 90° versetzt sind.

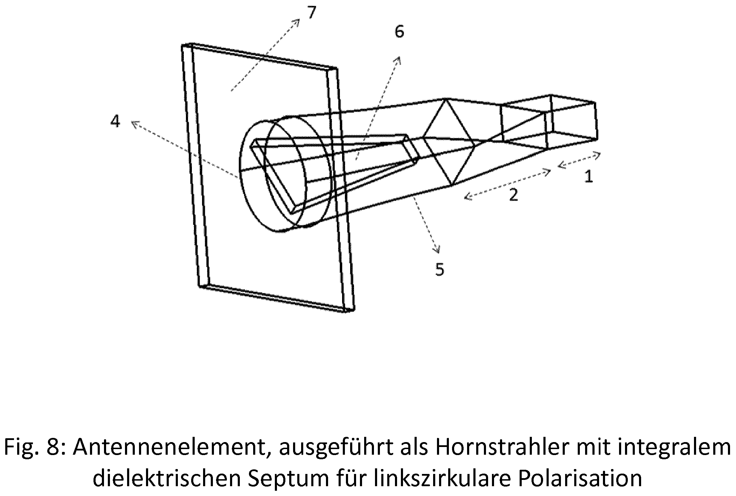

Fig. 8 zeigt ein Antennenelement, ausgeführt als Hornstrahler mit integralem Septum für linkszirkular polarisierte Wellen. Das Antennenelement besitzt einen Anschluss bestehend aus einem Rechteckhohlleiter, der für eine H10-Welle ausgelegt ist. Danach folgt eine Anpassstruktur, die den Rechteckhohlleiter mit einem quadratischen Hohlleiter verbindet. Danach folgt ein Hohlleiter, in dem sich ein dielektrisches Septum befindet und der mit der Rundhohlleiterantennenapertur verbunden ist. Das Septum wirkt dabei als dielektrischer Phasenschieber und ist um 45° zum Rechteckhohlleiter ausgerichtet. Außerdem befindet sich das Septum innerhalb der Rundhohlleiterantennenapertur und ist mit dem Radom verbunden. Mit diesem Aufbau wird eine linkszirkular polarisierte Welle an der Rundhohlleiterantennenapertur in eine H10-Welle am Antennenanschluss umgewandelt und umgekehrt.

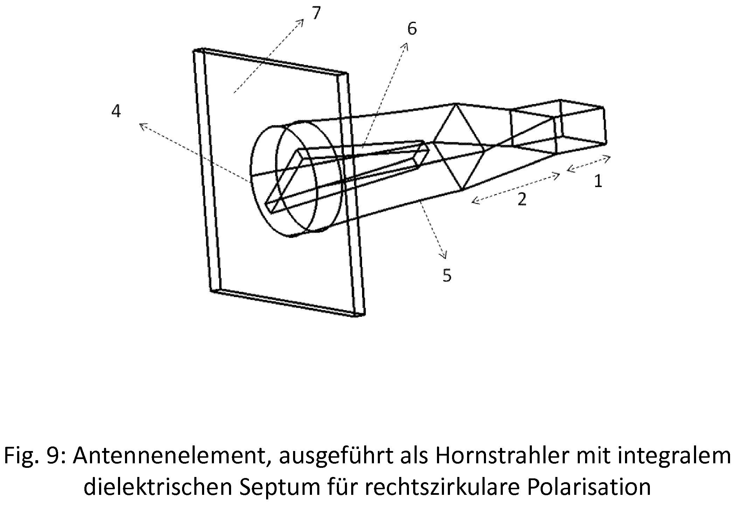

Fig. 9 zeigt ein Antennenelement, ausgeführt als Hornstrahler mit integralem Septum für rechtszirkulare Polarisation. Der Unterschied zu dem Antennenelement in Fig. 8, das für eine linkszirkulare Polarisation ausgelegt ist, besteht darin, dass sich das integrale Septum um 90° gedreht in dem Hohlleiter befindet.

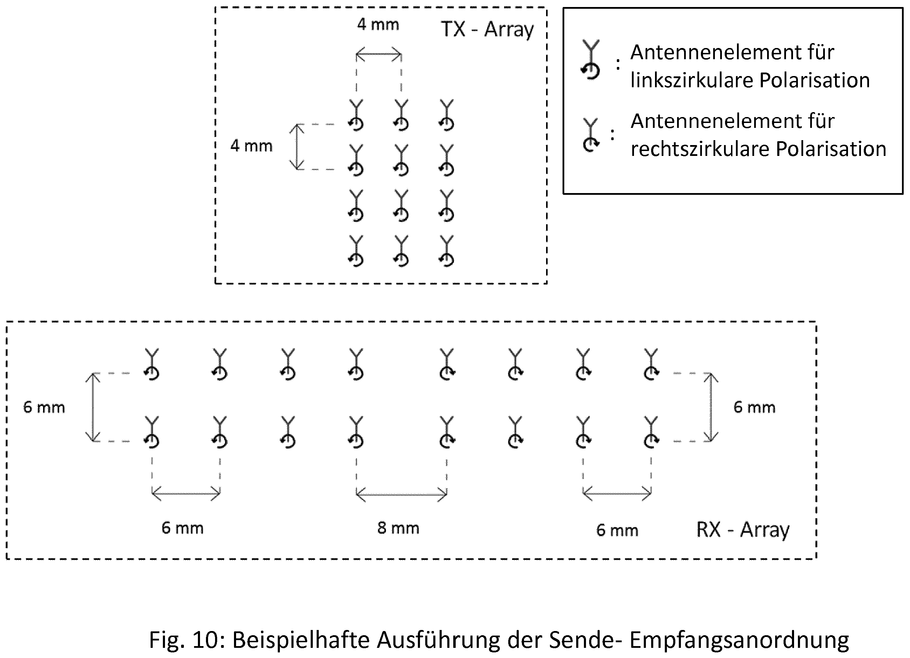

Fig. 10 zeigt eine beispielhafte Ausführungsform der Sende- und Empfangsanordnung. Dabei sind alle Sendeantennen erneut für linkszirkulare Polarisation ausgelegt. Für das erfindungsgemäße Radarsystem können auch alle Sendeantennen für rechtszirkulare Polarisation ausgelegt sein. Des Weiteren gibt es jeweils gleich viele Empfänger, die für linkszirkulare Polarisation ausgelegt sind, und Empfänger, die für rechtszirkulare Polarisation ausgelegt sind.

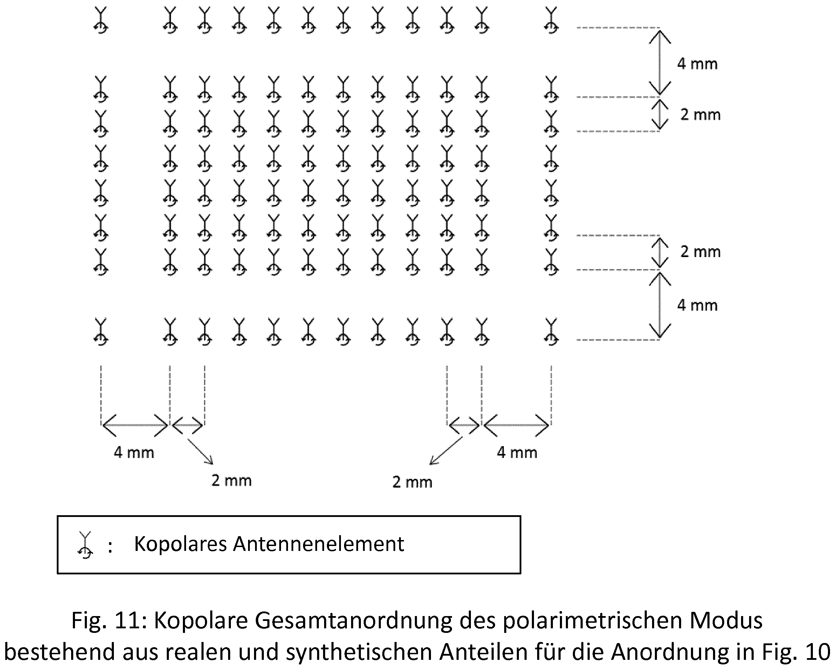

Fig. 11 zeigt das kopolare Gesamtarray, bestehend aus realen und synthetischen Antennenelementen, deren Positionen sich durch die Anordnung in Fig. 10 gemäß MIMO (Multiple Input Multiple Output) Prinzip ergeben. Kopolar bedeutet hierbei, dass nur die Empfänger zur Signalanalyse herangezogen werden, die auf dieselbe Polarisation wie die Sender ausgelegt sind. Diese Signalanalyse ist Teil des polarimetrischen Modus. In Fig. 11 werden linkszirkular polarisierte Wellen abgesendet und Empfänger verwendet, die auf linkszirkulare Polarisation ausgelegt sind. Hierbei ist eine Sende- Empfangsanordnung anzuwenden, die ein kopolares Gesamtarray erzeugt, dass eine bestimmte Abstandsregel einhält. Nämlich, dass der Antennenelementabstand in horizontaler und in vertikaler Richtung von der Mitte zum Rand des Antennenarrays mindestens gleichbleibt und an zumindest einer Position größer wird.

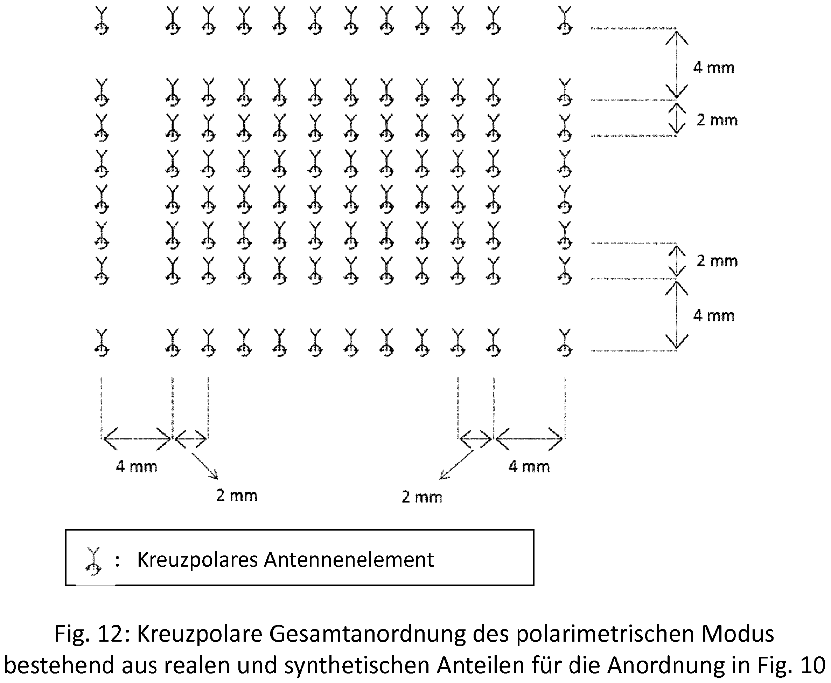

Fig. 12 zeigt das kreuzpolare Gesamtarray, bestehend aus realen und synthetischen Antennenelementen, deren Positionen sich durch die Anordnung in Fig. 10 gemäß dem MIMO Prinzip ergeben. Kreuzpolar bedeutet hierbei, dass nur die Empfänger zur Signalanalyse herangezogen werden, die auf die andere Polarisation wie die Sender ausgelegt sind. Diese Signalanalyse ist Teil des polarimetrischen Modus. In Fig. 12 werden linkszirkulare Wellen abgesendet und Empfänger verwendet, die auf rechtzirkulare Polarisation ausgelegt sind. Hierbei ist eine Sende- Empfangsanordnung anzuwenden, die ein kreuzpolares Gesamtarray erzeugt, dass eine bestimmte Abstandsregel einhält. Nämlich, dass der Antennenelementabstand in horizontaler und in vertikaler Richtung von der Mitte zum Rand des Antennenarrays mindestens gleichbleibt und an zumindest einer Position größer wird.

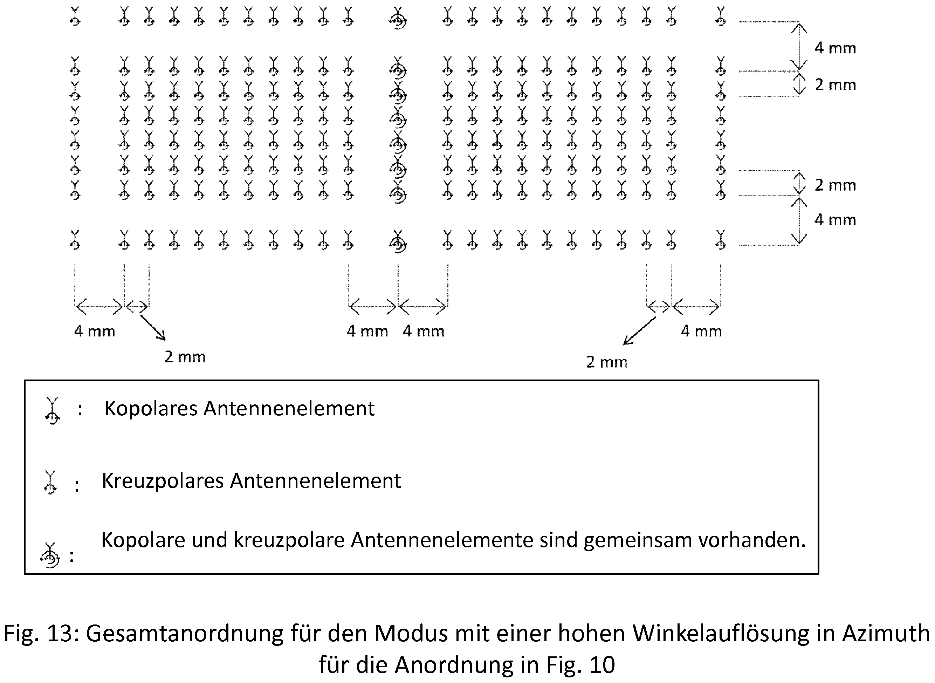

Fig. 13 zeigt das Gesamtarray für den Modus mit einer hohen Winkelauflösung in Azimut, bestehend aus realen und synthetischen Antennenelementen, deren Positionen sich durch die Anordnung in Fig. 10 gemäß dem MIMO Prinzip ergeben, wobei sowohl kopolare als auch kreuzpolare Antennenelemente verwendet werden. Dadurch wird in horizontaler Richtung eine große Antennenapertur generiert, die eine hohe Winkelauflösung in Azimut ermöglicht. Vorteilhafterweise ergibt sich dabei mindestens eine Antennenspalte, wie in Fig. 13, und/oder mindestens eine Antennenzeile, bei der sich kopolare und kreuzpolare Antennenelemente überlappen. Die durch Antennendesign und Zielbeschaffenheit verursachten Unterschiede zwischen den kopolaren und kreuzpolaren Antennenelementen in Phase und Amplitude können in Fig. 13 mittels der überlappenden Spalte signaltechnisch erfasst und bei der weiteren Signalprozessierung ausgeglichen werden. Dies ist erforderlich, wenn kopolare und kreuzpolare Antennenelemente gemeinsam z.B. im Beamformingprozess in Azimut-Richtung verwendet werden. Es ist erforderlich für jedes Winkel- und Entfernungstor die Amplituden und Phasen entsprechend zu korrigieren.

Diese Antennenspalte wird verwendet um Phasen- und Amplitudenunterschiede zwischen den kopolaren und den kreuzpolaren Antennenelementen der Gesamtanordnung bzw. des Gesamtarrays heraus zu kalibrieren. Dies ist eine Voraussetzung für die gemeinsame Nutzung der kopolaren und kreuzpolaren Antennenelemente in der Gesamtanordnung. Die heraus zu kalibrierenden Unterschiede in Amplitude und Phase entstehen einerseits aufgrund des Antennendesigns und andererseits aufgrund der Beschaffenheit der Ziele.

Des Weiteren ist es vorteilhaft Antennenelementabstände der Gesamtanordnung, die deutlich größer sind als die halbe Wellenlänge der Trägerfrequenz, in der Signalprozessierung mathematisch aufzufüllen. Hierbei bieten sich Interpolationsverfahren und/oder autoregressive Prädiktionen an. Mit diesen Methoden kann außerdem eine zusätzliche Vergrößerung der Apertur und somit eine weitere Erhöhung der Winkelauflösung erzielt werden.

Vorteilhafte Weiterentwicklungen sind Gegenstände der abhängigen Ansprüche.

### Bezugszeichenliste

TX: Sendeantennen
RX: Empfangsantennen
LO: Lokaloszillator
LHC: Left Hand Circular (Linkszirkulare Polarisation)
RHC: Right Hand Circular (Rechtszirkulare Polarisation)
DAC: Digital-Analog-Wandler
ADC: Analog-Digital-Wandler
1: Reckteckhohlleiter, ausgelegt für eine H10-Welle
2: Anpassungsstruktur
3: Hohlleiter, der zwei seitlich angebrachte und um 45° zum Reckeckhohlleiter ausgerichtete Stege aufweist
4: Rundhohlleiterantennenapertur
5: Hohlleiter, in dem sich ein dielektrisches Septum befindet
6: Dielektrisches Septum, dass in die Antenne hineinragt, mit dem Radom verbunden ist und um 45° zum Rechteckhohlleiter orientiert ist
7: Radom, das sich vor der Antenne befindet

## Patentansprüche

1. Polarimetrisches Radar bestehend aus:
- einer Sendeanordnung mit mehreren Sendern, bei der die Trägersignale eine zirkulare Polarisation aufweisen, wobei alle Sender der Sendeanordnung zeitgleich verwendet werden und jeder Sender mit einem Sendesignal betrieben wird, das mit einem individuellen digitalen Phasencode moduliert wird,
- einer Empfängeranordnung mit einer Antennenanordnung die Empfangsantennen aufweist, wobei die Empfängeranordnung die reflektierten Signale über die Antennenanordnung empfängt und die Empfangsantennen als Empfänger umfasst, wobei es sowohl Empfangsantennen gibt, die für linkszirkular polarisierte elektromagnetische Wellen ausgelegt sind, als auch Empfangsantennen, die für rechtzirkular polarisierte elektromagnetische Wellen ausgelegt sind,
- wobei durch die Verwendung mehrerer Sender und Empfänger eine Gesamtanordnung bereitgestellt wird, die gemäß dem Multiple Input Multiple Output Verfahren betrieben wird, **dadurch gekennzeichnet, dass**
- die Anzahl der bei der Signalanalyse verwendeten Empfangsantennen, die für linkszirkular polarisierte elektromagnetische Wellen ausgelegt sind, gleich der Anzahl der bei der Signalanalyse verwendeten Empfangsantennen, die für rechtszirkular polarisierte elektromagnetische Wellen ausgelegt sind, ist;
- mindestens zwei verschiedene Modi vorgesehen sind, wobei mindestens innerhalb eines ersten Modus polarimetrische Eigenschaften analysiert werden, indem die Empfangssignale der Empfangsantennen, die für eine linkszirkulare Polarisation ausgelegt sind, und die Empfangssignale der Empfangsantennen, die für eine rechtszirkulare Polarisation ausgelegt sind, jeweils separat bis zur Datenebene, die eine Radarbilddarstellung ermöglicht, prozessiert werden und anschließend deren Unterschiede analysiert werden; wobei mindestens innerhalb eines zweiten Modus hohe Winkelauflösungen analysiert werden, indem die Empfangsantennen, die für eine linkszirkulare Polarisation ausgelegt sind, und die Empfangsantennen, die für eine rechtszirkulare Polarisation ausgelegt sind, gemeinsam gemäß dem Multiple Input Multiple Output Verfahren eine Gesamtanordnung bilden und deren Empfangssignale gemeinsam prozessiert werden;
- innerhalb der Gesamtanordnungen des Modus, bei dem die für eine linkszirkulare Polarisation ausgelegten Empfangsantennen und die für eine rechtszirkulare Polarisation ausgelegten Empfangsantennen gemeinsam gemäß dem Multiple Input Multiple Output Verfahren eine Gesamtanordnung bilden, zumindest eine Spalte aus Antennenelementen und/oder zumindest eine Zeile aus Antennenelementen vorhanden ist, bei der sich Antennenelemente, die durch auf linkszirkularer Polarisation ausgelegten Empfangsantennen generiert werden, und Antennenelemente, die durch auf rechtszirkularer Polarisation ausgelegten Empfangsantennen generiert werden, überlappen und deren Signalunterschiede in Amplitude und Phase in der Signalprozessierung berücksichtigt werden;
- und wobei der Modus zur Analyse der polarimetrischen Eigenschaften für Objektklassifikation und Straßenzustandsbestimmung und der Modus für eine hohe Winkelauflösung zur präzisen Ortsbestimmung der Zielobjekte verwendet wird.

2. Polarimetrisches Radar nach Anspruch 1 und bei Verwendung des Modus, innerhalb dessen die polarimetrische Eigenschaften analysiert werden **dadurch gekennzeichnet, dass** der Abstand der einzelnen Antennenelemente bei dem sich gemäß dem Multiple Input Multiple Output Verfahren ergebenden Gesamtanordnung, von der Mitte bis zum Rand der Anordnung mindestens gleich bleibt und/oder an zumindest einer Position zunimmt.

3. Polarimetrisches Radar nach Anspruch 1 bis 2, **dadurch gekennzeichnet, dass** die Antennen als Hornantennen in Hohlleitertechnologie ausgeführt sind und vorzugsweise metallische oder dielektrische Phasenschieber aufweisen.

4. Polarimetrisches Radar nach Anspruch 3, **dadurch gekennzeichnet, dass** die Antennen als Steghornstrahler ausgeführt sind, wobei es sich vorzugsweise um zwei seitlich angebrachte Stege handelt, die um 45° zu einem als Antennenanschluss fungierenden Rechteckhohlleiter, angeordnet sind.

5. Polarimetrisches Radar nach Anspruch 3, **dadurch gekennzeichnet, dass** die Antennen als Hornantennen mit integralem Septum ausgeführt sind, wobei es sich vorzugsweise um dielektrisches Material handelt, das mit dem Antennen-Radom verbunden ist und um 45° zu einem als Antennenanschluss fungierenden Rechteckhohlleiter angeordnet ist.

6. Polarimetrisches Radar nach einem der Ansprüche 3 bis 5, wobei die Antennenapertur als Rundhohlleiter ausgeführt ist.

7. Verwendung des polarimetrischen Radars nach einem der Ansprüche 1 bis 6, für den Einbau in einer bewegten Basis, die vorzugsweise ein Automobil ist, und vorzugsweise in einem Frequenzbereich zwischen 76 GHz und 81 GHz arbeitet.

8. Verfahren zur Objektbestimmung, unter Verwendung des polarimetrischen Radars nach einem der Ansprüche 1 bis 7, **dadurch gekennzeichnet, dass** mehrere Radarsysteme innerhalb eines Verbundes und/oder mit anderen Radarsystemen mittels Phasenkodierung zusätzliche Informationen und Funktionen miteinander abstimmen und/oder kommunizieren wie vorzugsweise:
- zeitliche Synchronisation mehrerer Sensoren
- Optimierte Codeauswahl, wenn mehrere Radarsensoren im gleichen
- Frequenzbereich betrieben werden
- Fahrzeugdaten wie beispielsweise Bremsverhalten
- Fahrstrecken inklusive Gefahrenstellen
- Verkehrsflussinformationen

## Claims

1. A polarimetric radar consisting of:
- a transmission arrangement which has a plurality of transmitters and in which the carrier signals have a circular polarization, wherein all the transmitters of the transmission arrangement are used simultaneously and each transmitter is operated with a transmission signal that is modulated with an individual digital phase code,
- a receiver arrangement having an antenna arrangement which has receiving antennas, wherein the receiver arrangement receives the reflected signals via the antenna arrangement and comprises the receiving antennas as receivers, wherein there are both receiving antennas which are designed for left-hand circularly polarized electromagnetic waves and receiving antennas which are designed for right-hand circularly polarized electromagnetic waves,
- wherein, through the use of a plurality of transmitters and receivers, an overall arrangement is provided that is operated in accordance with the Multiple Input Multiple Output method, **characterized in that**
- the number of the receiving antennas used in the signal analysis which are designed for left-hand circularly polarized electromagnetic waves is equal to the number of the receiving antennas used in the signal analysis which are designed for right-hand circularly polarized electromagnetic waves;
- at least two different modes are provided, wherein, at least within a first mode, polarimetric properties are analyzed
**in that** the received signals of the receiving antennas which are designed for a left-hand circular polarization and the received signals of the receiving antennas which are designed for a right-hand circular polarization are each processed separately up to the data level which enables a radar image representation and their differences are subsequently analyzed; wherein, at least within a second mode, high angular resolutions are analyzed **in that** the receiving antennas which are designed for a left-hand circular polarization and the receiving antennas which are designed for a right-hand circular polarization jointly form an overall arrangement in accordance with the Multiple Input Multiple Output method and their received signals are processed jointly;
- within the overall arrangements of the mode in which the receiving antennas designed for a left-hand circular polarization and the receiving antennas designed for a right-hand circular polarization jointly form an overall arrangement in accordance with the Multiple Input Multiple Output method, at least one column of antenna elements and/or at least one row of antenna elements is present in which antenna elements that are generated by receiving antennas designed for left-hand circular polarization and antenna elements that are generated by receiving antennas designed for right-hand circular polarization overlap and their signal differences in amplitude and phase are taken into account in the signal processing;
- and wherein the mode for analyzing the polarimetric properties is used for object classification and road condition determination and the mode for a high angular resolution is used for the precise position determination of the target objects.

2. A polarimetric radar according to claim 1 and when using the mode within which the polarimetric properties are analyzed, **characterized in that** the spacing of the individual antenna elements in the overall arrangement resulting in accordance with the Multiple Input Multiple Output method at least remains the same from the center up to the edge of the arrangement and/or increases at at least one position.

3. A polarimetric radar according to claim 1 or 2, **characterized in that** the antennas are designed as horn antennas in waveguide technology and preferably have metallic or dielectric phase shifters.

4. A polarimetric radar according to claim 3, **characterized in that** the antennas are designed as ridged horn radiators, wherein they are preferably two laterally attached ridges which are arranged at 45° to a rectangular waveguide acting as an antenna connection.

5. A polarimetric radar according to claim 3, **characterized in that** the antennas are designed as horn antennas having an integral septum, wherein it is preferably a dielectric material which is connected to the antenna radome and which is arranged at 45° to a rectangular waveguide acting as an antenna connection.

6. A polarimetric radar according to any one of the claims 3 to 5, wherein the antenna aperture is designed as a circular waveguide.

7. Use of the polarimetric radar according to any one of the claims 1 to 6 for installation in a moving base, which is preferably an automobile, said polarimetric radar preferably working in a frequency range between 76 GHz and 81 GHz.

8. A method for object determination using the polarimetric radar according to any one of the claims 1 to 7, **characterized in that** a plurality of radar systems within a network and/or with other radar systems coordinate and/or communicate additional information and functions with one another by means of phase coding, such as preferably:
- temporal synchronization of a plurality of sensors
- optimized code selection when a plurality of radar sensors are operated in the same frequency range
- vehicle data such as, for example, braking behavior
- travel routes including danger points
- traffic flow information

## Revendications

1. Radar polarimétrique comprenant :
- un agencement d'émission comportant plusieurs émetteurs, dans lequel les signaux porteurs présentent une polarisation circulaire, tous les émetteurs de l'agencement d'émission étant utilisés simultanément et chaque émetteur étant exploité avec un signal d'émission qui est modulé avec un code de phase numérique individuel,
- un agencement de réception comportant un agencement d'antennes qui présente des antennes de réception, l'agencement de réception recevant les signaux réfléchis par l'intermédiaire de l'agencement d'antennes et comprenant les antennes de réception en tant que récepteurs, dans lequel il existe à la fois des antennes de réception qui sont conçues pour des ondes électromagnétiques à polarisation circulaire gauche et des antennes de réception qui sont conçues pour des ondes électromagnétiques à polarisation circulaire droite,
- dans lequel, par l'utilisation de plusieurs émetteurs et récepteurs, un agencement global est fourni, lequel est exploité selon le procédé à entrées multiples et sorties multiples ou Multiple Input Multiple Output, **caractérisé en ce que**
- le nombre des antennes de réception utilisées lors de l'analyse du signal qui sont conçues pour des ondes électromagnétiques à polarisation circulaire gauche est égal au nombre des antennes de réception utilisées lors de l'analyse du signal qui sont conçues pour des ondes électromagnétiques à polarisation circulaire droite ;
- au moins deux modes différents sont prévus, dans lesquels, au moins dans un premier mode, des propriétés polarimétriques sont analysées **en ce que** les signaux de réception des antennes de réception qui sont conçues pour une polarisation circulaire gauche et les signaux de réception des antennes de réception qui sont conçues pour une polarisation circulaire droite sont respectivement traités séparément jusqu'au niveau de données qui permet une représentation d'image radar, et leurs différences sont ensuite analysées ; dans lequel, au moins dans un deuxième mode, des résolutions angulaires élevées sont analysées
**en ce que** les antennes de réception qui sont conçues pour une polarisation circulaire gauche et les antennes de réception qui sont conçues pour une polarisation circulaire droite forment conjointement un agencement global selon le procédé Multiple Input Multiple Output et leurs signaux de réception sont traités conjointement ;
- au sein des agencements globaux du mode dans lequel les antennes de réception conçues pour une polarisation circulaire gauche et les antennes de réception conçues pour une polarisation circulaire droite forment conjointement un agencement global selon le procédé Multiple Input Multiple Output, au moins une colonne d'éléments d'antenne et/ou au moins une ligne d'éléments d'antenne est présente, dans laquelle des éléments d'antenne qui sont générés par des antennes de réception conçues pour une polarisation circulaire gauche et des éléments d'antenne qui sont générés par des antennes de réception conçues pour une polarisation circulaire droite se chevauchent, et leurs différences de signal en amplitude et en phase sont prises en compte lors du traitement du signal ;
- et dans lequel le mode d'analyse des propriétés polarimétriques est utilisé pour la classification d'objets et la détermination de l'état de la route, et le mode pour une résolution angulaire élevée est utilisé pour la détermination précise de la position des objets cibles.

2. Radar polarimétrique selon la revendication 1 et lors de l'utilisation du mode dans lequel les propriétés polarimétriques sont analysées, **caractérisé en ce que** la distance entre les différents éléments d'antenne dans l'agencement global résultant selon le procédé Multiple Input Multiple Output reste au moins identique du centre jusqu'au bord de l'agencement et/ou augmente en au moins une position.

3. Radar polarimétrique selon la revendication 1 ou 2, **caractérisé en ce que** les antennes sont réalisées sous forme d'antennes cornet en technologie de guides d'ondes et présentent de préférence des déphaseurs métalliques ou diélectriques.

4. Radar polarimétrique selon la revendication 3, **caractérisé en ce que** les antennes sont réalisées sous forme de radiateurs cornet à nervures, dans lequel il s'agit de préférence de deux nervures disposées latéralement qui sont agencées à 45° par rapport à un guide d'ondes rectangulaire faisant office de raccord d'antenne.

5. Radar polarimétrique selon la revendication 3, **caractérisé en ce que** les antennes sont réalisées sous forme d'antennes cornet présentant un septum intégré, dans lequel il s'agit de préférence d'un matériau diélectrique qui est relié au radôme d'antenne et qui est agencé à 45° par rapport à un guide d'ondes rectangulaire faisant office de raccord d'antenne.

6. Radar polarimétrique selon l'une des revendications 3 à 5, dans lequel l'ouverture d'antenne est réalisée sous forme d'un guide d'ondes circulaire.

7. Utilisation du radar polarimétrique selon l'une des revendications 1 à 6, pour le montage dans une base mobile, qui est de préférence une automobile, ledit radar polarimétrique fonctionnant de préférence dans une gamme de fréquences comprise entre 76 GHz et 81 GHz.

8. Procédé de détermination d'objets en utilisant le radar polarimétrique selon l'une des revendications 1 à 7, **caractérisé en ce que** plusieurs systèmes radar au sein d'un réseau et/ou avec d'autres systèmes radar coordonnent entre eux et/ou communiquent des informations et des fonctions supplémentaires au moyen d'un codage de phase, comme de préférence :
- la synchronisation temporelle de plusieurs capteurs
- une sélection de code optimisée lorsque plusieurs capteurs radar sont exploités dans la même gamme de fréquences
- des données de véhicule telles que, par exemple, le comportement au freinage
- des itinéraires de circulation, y compris les zones dangereuses
- des informations sur le flux de circulation
